# EUROPÄISCHE PATENTSCHRIFT

(11) **EP 1 174 705 B1**
(45) Veröffentlichungstag und Bekanntmachung des Hinweises auf die Patenterteilung: **26.04.2006**
(21) Anmeldenummer: 01115393.9
(22) Anmeldetag: 26.06.2001
(51) Int. Cl.: G01N 21/39

(54) **Verfahren zur Brennwertbestimmung von Erdgas**
Method for determining the calorific value of natural gas
Procédé pour déterminer le valeur calorifique d'un gaz naturel

(30) Priorität: 29.06.2000 DE 10031674
(43) Veröffentlichungstag der Anmeldung: 23.01.2002
(73) Patentinhaber: Landis+Gyr GmbH, 90495 Nürnberg (DE)
(72) Erfinder: Fleischer, Maximlian, Dr., 85635 Höhenkirchen (DE); Strzoda, Rainer, 81825 München (DE); Magori, Erhard, 85622 Feldkirchen (DE); Meixner, Hans, Dr., 85540 Haar (DE); Henning, Oliver, 80469 München (DE)
(74) Vertreter: Bauerschmidt, Peter

(56) Entgegenhaltungen:
- DE-A- 19 717 145
- DE-A- 19 838 301
- MARTINELLI R U ET AL: "NEAR-INFRARED INGAAS/INP DISTRIBUTED-FEEDBACK LASERS FOR SPECTROSCOPIC APPLICATIONS" PROCEEDINGS OF THE SPIE, SPIE, BELLINGHAM, VA, US, Bd. 2148, 25. Januar 1994 (1994-01-25), Seiten 292-307, XP001032850

## Beschreibung

Die Erfindung betrifft die Qualitätsbestimmung von Erdgas, dessen Brennwert stark von seinen Bestandteilen abhängt.

Die kontinentübergreifende Vernetzung und die fortschreitende Deregulierung des Erdgasmarktes bringen es mit sich, dass dem Endverbraucher zunehmend häufiger Gas aus den unterschiedlichsten Förderquellen im kurzfristigen Wechsel geliefert wird. Dabei variiert der Brennwert des Erdgases aufgrund seiner unterschiedlichen Zusammensetzung beträchtlich zwischen den verschiedenen Herkunftsgebieten. In der folgenden Tabelle ist die jeweilige Zusammensetzung von Erdgas zweier verschiedener Fördergebiete dargestellt:

| | Einheit | Niederlande | Rußland |
|---|---|---|---|
| CH₄ | Mol-% | 83,7 | 98,3 |
| C₂H₆ | Mol-% | 3,5 | 0,5 |
| C₃H₈ | Mol-% | 0,7 | 0,2 |
| C₄H₁₀ | Mol-% | 0,3 | 0,1 |
| N₂ | Mol-% | 10,4 | 0,8 |
| CO₂ | Mol-% | 1,4 | 0,1 |

Um eine qualitätsgerechte Abrechnung des gelieferten Erdgases zu gewährleisten, ist es wünschenswert, den Brennwert "online" zu bestimmen. Eine derartige Anforderung tritt auf allen Ebenen vom Gaskraftwerk über Verteilstationen bis zum Privatkunden hin auf. Große Gasversorger kaufen beispielsweise Erdgas zu und benötigen eine "online"-Überwachung von dessen Brennwert in der Misch- und Verteilerstation. Großabnehmer benötigen sowohl aus betriebswirtschaftlichen Gründen als auch aus technischen Gründen Informationen über den aktuellen Brennwert des Gases. Die Kenntnis des Brennwerts ist insbesondere zum optimalen Betrieb von Gasturbinen notwendig. Privatkunden müssen sich bisher auf die Zusage eines Gaslieferanten verlassen, was den zugesicherten Brennwert des gelieferten Gases betrifft.

Die Bestimmung des Brennwertes von Mischgasen ist nicht nur für die Behandlung von Erdgas notwendig, sondern kann beispielsweise auch für Deponiegase erforderlich sein, wenn diese einer Verwertung zugeführt werden.

Bisher ist eine Bestimmung des Brennwertes der Gase, die im Hausbrand eingesetzt werden, nicht üblich. Bei größeren Kraftwerken wird die Gaszusammensetzung, und damit der Brennwert, beispielsweise mittels Gaschromatographie bestimmt. Dabei werden die Konzentrationen einer ganzen Reihe von Kohlenwasserstoffen, die in dem Mischgas enthalten sind, bestimmt. Das Verfahren ist genau, jedoch hinsichtlich der Anschaffungs- und laufenden Kosten sehr teuer, da insbesondere die Bedienung durch geschultes Personal vorgenommen werden muss.

Aus DE19 838 301 ist ein Verfahren zur Brennwertbestimmung von Erdgas bekannt mittels Absorptionsspektroskopie im infraroten Wellenlängenbereich DE 19 838 301 stellt den nächsten Stand der Technik dar.

Der Erfindung liegt die Aufgabe zugrunde, ein wartungsfreies, genaues und kostengünstiges Verfahren zur Bestimmung des Brennwertes von Erdgas zur Verfügung zu stellen. Dies geschieht durch ein Verfahren mit den Merkmalen entsprechend Anspruch 1.

Die Brennwertbestimmung von Erdgas wird mit zunehmender Anzahl der mit ihrer Konzentration detektierten Erdgasbestandteile genauer. Da die Absorptionsstrecke lediglich mit einem einzigen Laser bzw. einer Laserdiode bedient wird, muss ein Wellenlängenbereich ausgewählt werden, in welchem von jeder zu detektierenden Erdgaskomponente eine detektierbare Spektrallinie vorhanden ist.

Die Bestimmung des Brennwertes beruht auf der Messung der Konzentrationen der einzelnen Gaskomponenten des Erdgases. In vorteilhafter Weise wird dazu die Absorptionsspektroskopie im nahen bzw. im mittleren Infrarotwellenbereich eingesetzt.

Besondere Vorteile ergeben sich bei der Verwendung von Spektrallinien bei etwa 1,68 µm. Damit wird die Messung in der Oberwellenbande der Kohlenwasserstoffmoleküle durchgeführt. Die Messung liegt weiterhin im Bereich von nahen infraroten Wellenlängen. Das nahe Infrarotlicht reicht etwa bis zu Wellenlängen bis zu 2,5 µm. Oberhalb von 2,5 µm schließt sich das mittlere Infrarotlicht an.

Vorteilhafterweise werden für die Brennwertbestimmung von Erdgas mindestens die in der Regel vier Hauptbestandteile Methan, Ethan, Propan und Butan detektiert und ausgewertet. Die Spektren von Methan und Ethan zeigen ausgeprägte Linienspektren, während Butan und Propan wegen der Vielzahl der Spektrallinien ein quasi kontinuierliches Spektrum aufweisen. Die kontinuierlichen Spektren sind der Absorptionsmessung mittels Laser oder Laserdiode wegen der begrenzten Abstimmbarkeit der Emissionswellenlänge nicht ohne weiteres zugänglich. Die bezeichneten Spektren weisen jedoch jeweils eine schmale Absorptionsstruktur bei ca. 1,686 µm mit einer spektralen Breite von ≤ 1,5 nm auf. Diese Spektrallinien lassen eine Messung der Absorption mit Laserdioden auch für Butan und Propan zu. Laserdioden wie beispielsweise vom Typ: DEFB weisen eine Abstimmbarkeit von ca. 0,1 nm/K auf. Mit einer Temperaturmodulation von 40 K kann somit eine Abstimmung der Emissionswellenlänge über 4 nm erreicht werden. Dies bedeutet, dass mit einem Temperaturscan die Absorptionslinien von Methan, Ethan, Propan und Butan überstrichen werden können. Die Auswertung der Spektren nach den Gaskonzentrationen erfolgt gemäß dem Lambert-Beerschem Absorptionsgesetz.

Eine Messung zur Bestimmung des Brennwertes erfolgt vorzugsweise im Bereich von wenigen Millibar (mbar) Überdruck. Dieser im Bereich des Atmosphärendruckes angesiedelte Überdruck ermöglicht eine direkte Messung, beispielsweise innerhalb einer Rohrleitung. Dazu wird die Absorptionsmessstrecke positioniert. Bei höheren Drücken verbreiten sich die Absorptionslinien, so dass beispielsweise bei 100 bar keine Differenzierung zwischen benachbarten Spektrallinien möglich ist. Für solche Fälle muss das Gasgemisch extrahiert werden und in einer externen Absorptionsmesszelle bei annähernd Normaldruck gemessen werden. Eine Messung bei Unterdruck ist verbunden mit einer Verringerung der spektralen Linienbreite der einzelnen Absorptionslinien. Dies erhöht die Selektivität bei der Messung der einzelnen Gaskomponenten.

Im folgenden wird anhand von Spektren der Gase Methan, Ethan, Propan, Butan im Wellenlängenbereich um 1,686 µm ein Ausführungsbeispiel beschrieben. ,
Figur 1 zeigt das Spektrum bei Vorhandensein von 1 % Propan,
Figur 2 zeigt das Spektrum bei Vorhandensein von 1 % Methan,
Figur 3 zeigt das Spektrum bei Vorhandensein von 0,2 % Ethan,
Figur 4 zeigt das Spektrum bei Vorhandensein von 1,0 % Butan.

Die Ausführung des Messaufbaus bzw. die Durchführung der Messung kann beispielsweise wie in der Patentschrift DE 197 17 145 C2, "Verfahren zur selektiven Detektion von Gasen und Gassensor zu dessen Durchführung" erfolgen.

Die Messung von vier Hauptbestandteilen von Erdgas ergibt in der Regel eine ausreichende Genauigkeit für den Brennwert. Wird wirklich gefordert, noch weitere Erdgaskomponenten zur Berechnung des Brennwertes hinzuzunehmen, so können mittels Einsatz eines weiteren Lasers noch weitere schwere Kohlenwasserstoffe detektiert werden. Darüber hinaus kann Erdgas auch Wasser und Kohlendioxid enthalten, was ebenfalls durch zusätzliche Absorptionsstrecken gemessen werden muss.

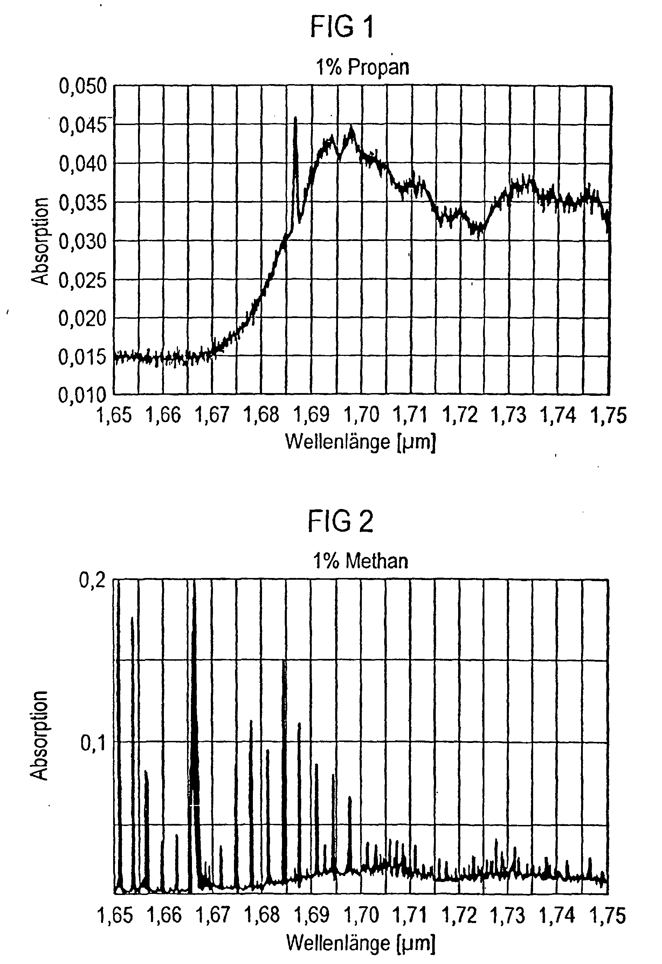

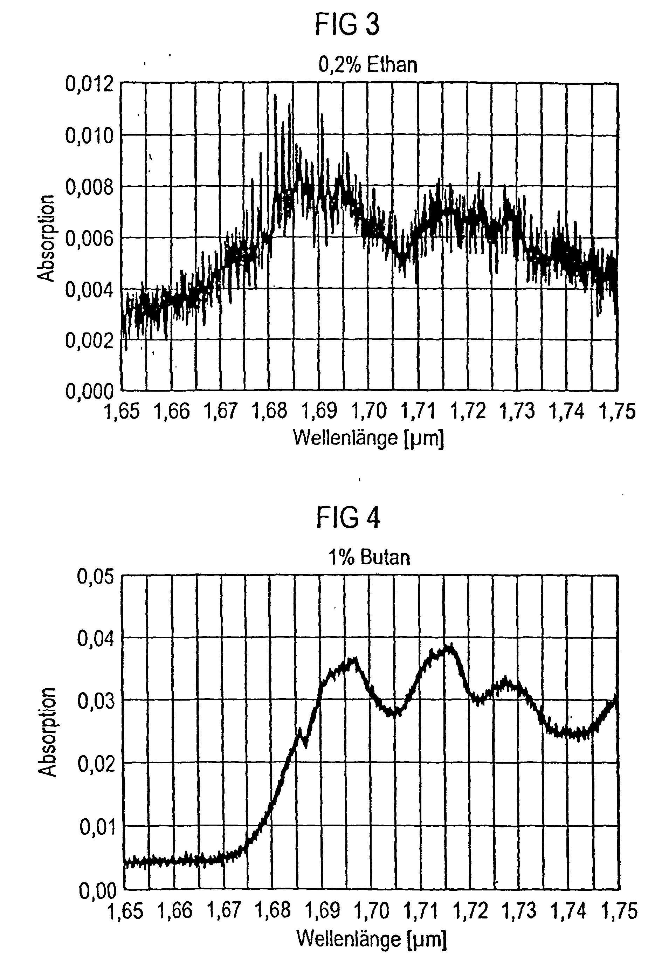

In Figur 1 ist eine Spektrallinie bei ca. 1, 686 µm Wellenlänge sichtbar. Gleiches gilt für die Figur 4 im Spektrum von Butan. Da beispielsweise bei einer Temperaturmodulation von 40 K die Emissionswellenlänge eines Lasers sich um 4 nm bzw. 0,004 µm ändert, könnten somit gleichzeitig Emissionswellenlängen im Bereich von 1,685 bis 1,689 µm überstrichen werden. In diesem Bereich liegen auswertbare Spektrallinien, was in den Figuren 1 bis 4 zu erkennen ist.

Eine, wie oben beschriebene, Bestimmung des Brennwertes von Erdgas ist kostengünstig und wartungsfrei. Darüber hinaus kann eine regelmäßige Messung vorgenommen werden, die auch online zu verarbeiten ist. Dies ist insbesondere für den Betrieb von Gasturbinen interessant, deren Einstellung in Abhängigkeit von Brennwertänderungen nachgeführt werden muss.

## Patentansprüche

1. Verfahren zur Brennwertbestimmung von Erdgas mittels Absorptionsspektroskopie im infraroten Wellenlängenbereich unter Einsatz einer einzigen temperaturabhängig durchstimmbaren, spektral monomodigen Laserdiode, wobei
- die zu detektierenden Erdgaskomponenten Methan, Ethan, Propan und Butan sind,
- der Wellenlängenbereich der Laserdiode so ausgewählt wird, dass in diesem von jeder zu detektierenden Erdgaskomponente eine detektierbare Spektrallinie vorhanden ist,
- die Emissionswellenlänge der Laserdiode beim Durchstimmen im ausgewählten Wellenlängenbereich mindestens eine vorgegebene Absorptionslinie im Spektrum einer jeden zu detektierenden Erdgaskomponente überstreicht,
- die Konzentrationen der Erdgaskomponenten ermittelt werden, und
- die einzelnen Brennwerte der Erdgaskomponenten, sowie der Brennwert des Erdgases mittels der Konzentrationen der einzelnen Erdgaskomponenten berechnet werden.

2. Verfahren nach Anspruch 1, wobei im nahen oder im mittleren infraroten Wellenlängenbereich gemessen wird.

3. Verfahren nach Anspruch 2, wobei
in der Oberwellenbande der CH-Schwingungen der Kohlenwasserstoffmoleküle in der Umgebung von 1,68 µm gemessen wird.

4. Verfahren nach Anspruch 1, wobei zusätzlich Erdgaskomponenten wie schwerere Kohlenwasserstoffe, Wasser und Kohlendioxid mittels eines weiteres Lasers oder weiterer Laserdioden gemessen werden.

5. Verfahren nach einem der vorhergehenden Ansprüche, wobei der Druck des zu messenden Erdgases ungefähr dem Atmosphärendruck entspricht oder im Überdruckbereich liegt.

## Revendications

1. Procédé de détermination du pouvoir calorifique de gaz naturel au moyen d'une spectroscopie par absorption dans la plage infrarouge de longueur d'onde en utilisant une seule diode laser définissable en fonction de la température et monomode au niveau spectral, dans lequel
- les composants à détecter du gaz naturel sont le méthane, l'éthane, le propane et le butane,
- la plage de longueur d'onde de la diode laser est choisie de manière à ce que soit disponible dans celle-ci, pour chaque composant à détecter du gaz naturel, une ligne spectrale détectable,
- la longueur d'onde d'émission de la diode laser, lors de la détermination dans la plage de longueur d'onde sélectionnée, balaie au moins une ligne d'absorption prédéfinie dans le spectre de chaque composant à détecter du gaz naturel,
- les concentrations des composants du gaz naturel sont déterminées et
- les pouvoirs calorifiques individuels des composants du gaz naturel ainsi que le pouvoir calorifique du gaz naturel sont calculés au moyen des concentrations des composants individuels du gaz naturel.

2. Procédé selon la revendication 1, dans lequel la mesure est faite dans la plage infrarouge proche ou moyenne de longueur d'onde.

3. Procédé selon la revendication 2, dans lequel la mesure est faite dans la bande d'harmonique des vibrations CH des molécules d'hydrocarbure aux alentours de 1,68 µm.

4. Procédé selon la revendication 1, dans lequel on mesure en plus les composants du gaz naturel comme les hydrocarbures plus lourds, l'eau et le dioxyde de carbone au moyen d'un autre laser ou d'autres diodes laser.

5. Procédé selon une des revendications précédentes, dans lequel la pression du gaz naturel à mesurer équivaut approximativement à la pression atmosphérique ou se situe dans la plage de surpression.

## Claims

1. A method for determining the gross calorific value of natural gas by means of absorption spectroscopy in the infrared wavelength range using a single, temperature-dependently tunable, spectrally single-mode laser diode, wherein
- the natural gas components to be detected are methane, ethane, propane and butane,
- the wavelength range of the laser diode is selected so that a detectable spectral line from each of the natural gas components to be detected is present therein,
- during tuning in the selected wavelength range the emission wavelength of the laser diode covers at least one predetermined absorption line in the spectrum of each natural gas component to be detected,
- the concentrations of the natural gas components are determined and
- the individual gross calorific values of the natural gas components and the gross calorific value of the natural gas are calculated by means of the concentrations of the individual gas components.

2. The method according to claim 1, wherein measurements are made in the near or middle infrared wavelength range.

3. The method according to claim 2, wherein measurements are made in the harmonic band of the CH vibrations of the hydrocarbon molecules in the vicinity of 1.68 µm.

4. The method according to claim 1, wherein additionally natural gas components such as heavy hydrocarbons, water and carbon dioxide are measured by means of another laser or other laser diodes.

5. The method according to any one of the preceding claims, wherein the pressure of the natural gas to be measured approximately corresponds to atmospheric pressure or lies in the overpressure range.
